# EUROPÄISCHE PATENTSCHRIFT

(11) **EP 1 249 911 B1**
(45) Veröffentlichungstag und Bekanntmachung des Hinweises auf die Patenterteilung: **16.11.2011**
(21) Anmeldenummer: 02008312.7
(22) Anmeldetag: 11.04.2002
(51) Int. Cl.: H02B 13/00

(54) **Vorrichtung zum elektrischen Verbinden von zwei vorzugsweise Isoliergas-gefüllten Schaltfeldern, insbesondere Sammelschienenkupplung**
Coupling system for gas insulated switchgears modules, in particular busbars coupling
Dispositif pour connecter électriquement deux cellules de commutation à isolation gazeuse, en particulier connection de barres omnibus

(30) Priorität: 12.04.2001 DE 10119183
(43) Veröffentlichungstag der Anmeldung: 16.10.2002
(73) Patentinhaber: Pfisterer Kontaktsysteme GmbH, 73650 Winterbach (DE)
(72) Erfinder: Bäuerle, Gottfried, Dipl.-Ing., 70736 Fellbach (DE); Deister, Paul Friedrich, Dr.-Ing., 74336 Brackenheim (DE); Wendt, Eckhard, Dr.rer.nat., 73257 Köngen (DE)
(74) Vertreter: Bartels & Partner

(56) Entgegenhaltungen:
- EP-A- 0 520 933
- DE-A- 2 750 215

## Beschreibung

Die Erfindung betrifft eine Vorrichtung zum elektrischen Verbinden von zwei vorzugsweise Isoliergas-gefüllten Schaltfeldern, insbesondere eine Sammelschienenkupplung, gemäß dem Oberbegriff des Anspruchs 1.

Sammelschienenkupplungen sind beispielsweise aus der DE 43 12 261 C2 bekannt. Auf der Seite jedes Schaltfeldes weist die bekannte Sammelschienenkupplung ein Buchsenelement aus einem Gießharz mit einem darin angeordneten Kontaktelement und einem Feldsteuerelement auf, wobei die Kontaktelemente durch ein Verbindungselement elektrisch miteinander verbindbar sind. Bei der bekannten Vorrichtung wird das Feldsteuerelement zum Teil vom Kontaktelement einstückig ausgebildet, zum Teil ist ein elektrisch leitendes Material in einem mittleren Bereich eines Isolierelements angeordnet. Diese zweiteilige Ausgestaltung des Feldsteuerelements ist aufwendig in der Herstellung und Montage. Außerdem erfordert die bekannte Vorrichtung bei der Montage eine exakte Ausrichtung der beiden Kontaktelemente zueinander.

Aus der EP 0520 933 B1 ist eine gattungsgemäße Vorrichtung bekannt, bei der in einem Metallrohr das Verbindungselement angeordnet ist, wobei sich das Verbindungselement in dem Metallrohr über elastische Bänder abstützt, um Lagefehler ausgleichen zu können.

Der Erfindung liegt das Problem zugrunde, eine gattungsgemäße Vorrichtung bereitzustellen, welche die Nachteile des Standes der Technik überwindet. Insbesondere soll die Vorrichtung einfach in der Herstellung und Montage sein, dauerhaft zuverlässig Teilentladungen verhindern und zudem vielseitig einsetzbar sein.

Das Problem ist durch die im Anspruch 1 bestimme Vorrichtung gelöst. Besondere Ausführungsarten der Erfindung sind in den Unteransprüchen bestimmt.

Dadurch, dass das Feldsteuerelement sich axial über die gesamte Länge des Verbindungselements erstreckt, insbesondere über die gesamte innere Länge der Sammelschienenkupplung, wodurch sämtliche mögliche Lufteinschlüsse im Inneren der Sammelschienenkupplung abgesteuert sind, und dass das Feldsteuerelement (17) aus einem kautschukartig elastisch verformbaren Werkstoff besteht, ist eine dauerhaft zuverlässige Feldabsteuerung gewährleistet und dadurch sind Teilentladungen zuverlässig verhindert. Das Vorteilhafte der Erfindung ist dabei, dass die Kontaktstellen in das Innere der Vorrichtung verlagert sind, während das Feldsteuerelement sich nahezu über die gesamte axiale Länge der Vorrichtung erstreckt. Vorzugsweise ist das Feldsteuerelement mit beiden Kontaktelementen elektrisch verbunden.

Vorzugsweise ist das Feldsteuerelement im wesentlichen hohlzylindrisch und an seinen Enden trichterförmig aufgeweitet. Die Aufweitung erfolgt in einem Winkelbereich von 0 bis 120°, insbesondere zwischen 60 und 90° und vorzugsweise etwa 90°. Dadurch ist die Feldsteuerwirkung weiter verbessert. Das Feldsteuerelement nimmt in seinem hohlzylindrischen Inneren beide Kontaktelemente und das Verbindungselement auf.

Vorzugsweise ist das Feldsteuerelement aus einem elektrisch leitfähigen Silikonkautschuk hergestellt, insbesondere als Spritzgußteil. Auch das Buchsenelement ist vorzugsweise ein Spritzgußteil, im Gegensatz zu dem aus dem Stand der Technik bekannten Gießharzteilen. Durch das Herstellen als Spritzgußteil kann das Buchsenelement dünnwandiger, filigraner und damit funktionsreicher hergestellt werden und es läßt sich eine Teilentladungsfreiheit bis zu Spannungen von 36 kV oder darüber hinaus bei den in der Praxis üblichen Geometrien gewährleisten. Die Teilentladungsfreiheit des Spritzgußteils ist vor allem dann besonders weitgehend, wenn das zu spritzende Ausgangsmaterial und/oder die eingesetzte Spritzform durch einen gegenüber Atmosphärendruck reduzierten Druck entlüftet ist, insbesondere mit einem Vakuum beaufschlagt wird. Zum Entlüften des Ausgangsmaterials kann dessen Viskosität zusätzlich oder alternativ zur Unterdruckbeaufschlagung beispielsweise durch Temperieren, durch Vergrößern der Oberfläche, beispielsweise durch Auswalzen, und/oder durch Zugabe von Zusatzstoffen herabgesetzt werden. Die Spritzform kann ausgeheizt werden, um Feuchtigkeitsniederschlag zu entfernen und zu verhindern.

Auf der vom Verbindungselement abgewandten Seite ist hinter dem Feldsteuerelement und innerhalb des Buchsenelements ein Isolierelement angeordnet, das vorzugsweise aus einem elektrisch isolierenden Silikonkautschuk besteht und insbesondere als Spritzgußteil hergestellt ist. Auf seiner vom Verbindungselement abgewandten Seite weist das Isolierelement mindestens abschnittsweise eine elektrisch leitfähige Oberfläche auf. Diese ist beispielsweise durch Aufsprühen oder Aufstreichen eines flüssigen und elektrisch leitfähigen Beschichtungsmittels herstellbar, beispielsweise von kohlenstoffhaltigem Silikonkautschuk. Die leitfähige Oberfläche kann auf ein vorgebbares Potential gelegt werden, beispielsweise auf Erdpotential. Durch die leitfähige Oberfläche wird der Flanschbereich des Buchsenelements zur Verhinderung von Teilentladungen abgesteuert.

Das Verbindungselement ist im wesentlichen rohrförmig und weist einen axial durchgehenden Spalt auf. Dabei sind in Umfangsrichtung hintereinander mehrere Verbindungssegmente angeordnet, die jeweils mindestens eine Kontaktstelle zu den Kontaktelementen bilden. Die einzelnen Verbindungssegmente sind vorzugsweise über jeweils einen in der axialen Mitte angeordneten schmalen Verbindungssteg miteinander verbunden. Dies gilt nicht für die beiden den axialen Spalt bildenden Verbindungssegmente. Diese bilden vielmehr einstückig miteinander korrespondierende Anschlagmittel aus, die einen minimalen Durchmesser des Verbindungselements bestimmen. Vorzugsweise auf der Außenseite verläuft um das Verbindungselement eine Fremdfeder, beispielsweise eine sogenannte Schlingfeder. Diese Fremdfeder wirkt derart, dass der Durchmesser des rohrförmigen Verbindungselements minimiert wird. Durch die von den Verbindungssegmenten ausgebildeten Anschlagmittel kann der minimale Durchmesser derart eingestellt werden, dass er nur wenige Zehntel Millimeter geringer ist als das Maß der zu kontaktierenden Kontaktelemente. Dies hat den Vorteil, dass das Verbindungselement mit verhältnismäßig geringen Kräften auf die Kontaktelemente aufschiebbar ist und dennoch eine dauerhaft hohe Kontaktkraft bereitstellt.

Die Verbindungssegmente weisen einen Biegeradius auf, der kleiner ist als der Radius des Verbindungselements. Dadurch bildet jedes Verbindungssegment vorzugsweise zwei Kontaktstellen mit dem zugehörigen Kontaktelement aus.

Vorzugsweise weist das Kontaktelement an seinem dem Verbindungselement zugewandten Ende ein mindestens teilweise kugelförmiges Kontaktstück auf, auf welches das Verbindungselement aufschiebbar ist. Durch die jedenfalls teilkugelförmige Ausbildung, ist nicht nur die Montage vereinfacht, sondern es läßt sich auch ein geringer Versatz in der radialen und/oder axialen Ausrichtung der beiden Kontaktelemente zueinander auf einfache Weise ausgleichen.

Weitere Vorteile der Erfindung ergeben sich aus den Unteransprüchen zu der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt einen Querschnitt durch ein erstes Ausführungsbeispiel der Erfindung,
- Fig. 2: zeigt eine Seitenansicht des Verbindungselements,
- Fig. 3: zeigt einen Querschnitt durch das Verbindungselement,
- Fig. 4: zeigt eine perspektivische Darstellung des Verbindungselements,
- Fig. 5: zeigt ein zweites Ausführungsbeispiel,
- Fig. 6: zeigt eine Draufsicht auf einen Querschnitt auf das zweite Ausführungsbeispiel,
- Fig. 7: zeigt in perspektivischer Ansicht das zweite Ausführungsbeispiel,
- Fig. 8: zeigt ein drittes Ausführungsbeispiel,
- Fig. 9: zeigt ein viertes Ausführungsbeispiel,
- Fig. 10: zeigt das für die Vorrichtung der Fig. 9 verwendete zweite Ausführungsbeispiel des Verbindungselements,
- Fig. 11: zeigt einen Schnitt durch das Verbindungselement der Fig. 10 gemäß XI - XI, und
- Fig. 12: zeigt eine perspektivische Ansicht des in den Fig. 10 und 11 dargestellten Verbindungselements.

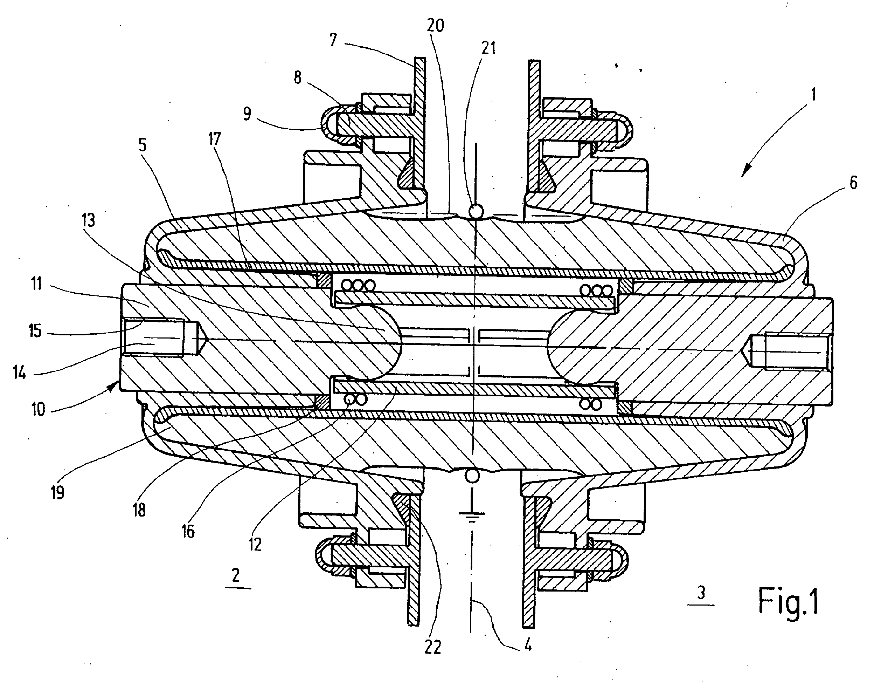

Die Fig. 1 zeigt einen Querschnitt durch ein erstes Ausführungsbeispiel der Erfindung. Durch die Sammelschienenkupplung 1 werden zwei Isoliergasgefüllte Schaltfelder 2, 3 miteinander verbunden. Die strichpunktierte Linie 4 stellt dabei die Trennebene dar. Als Isoliergas wird üblicherweise Schwefelhexafluorid (SF₆) eingesetzt. Da die Sammelschienenkupplung 1 zu beiden Seiten der Trennebene 4 im wesentlichen symmetrisch aufgebaut ist, wird im nachfolgenden im wesentlichen der in der Fig. 1 in der linken Bildhälfte dargestellte Teil beschrieben.

Auf der Seite jedes Schaltfeldes 2, 3 weist die Sammelschienenkupplung 1 jeweils ein Buchsenelement 5, 6 auf, das mittels eines metallischen Ringflansches 7 am Gehäuse des jeweiligen Schaltfeldes 2 festgelegt ist. Der Ringflansch 7 ist vorzugsweise durch das Gehäuse bzw. die Gehäusewand des jeweiligen Schaltfeldes 2, 3 selbst ausgebildet. In Umfangsrichtung gleich verteilt stehen vom Ringflansch 7 bzw. der Gehäusewand Stehbolzen 8 ab, die endseitig ein Außengewinde aufweisen, auf das eine Hutmutter 9 unter Zwischenlage einer Unterlegscheibe aufschraubbar ist. Damit ist das Buchsenelement 5 am Ringflansch 7 bzw. an der Gehäusewand festlegbar.

Das Buchsenelement 5 bildet nach Innen einen im wesentlichen hohlzylindrischen Raum zur Aufnahme des Kontaktelements 10 aus. Das Kontaktelement 10 ist in das Buchsenelement 5 eingebettet; vorzugsweise ist das Kontaktelement 10 vom Buchsenelement 5 umspritzt. Nach Außen ist das Buchsenelement 5 in axialer Richtung im wesentlichen konisch. Zwischen der konischen Außenfläche und der dem Kontaktelement 10 zugewandten Innenfläche bildet das Buchsenelement 5 einen Ringraum zur Aufnahme des Isolierelements 19 bzw. des Feldsteuerelements 17 aus, die an die Form des Ringraums angepasst sind, insbesondere in diesem Bereich ringkeilförmig oder ringkonusförmig ausgebildet sind, und den Ringraum im wesentlichen vollständig ausfüllen. Durch dieses partielle "Einkammern" des Isolierelements 19 bzw. des Feldsteuerelements 17 im Buchsenelement 5 ist die Feldsteuerwirkung und Teilentladungsfreiheit weiter verbessert und die Montage erleichtert.

Das Kontaktelement 10 weist einen ersten im wesentlichen kreiszylindrischen Abschnitt 11 auf, an dem sich in Richtung auf das Verbindungselement 12 ein teilkugelförmiges Kontaktstück 13 anschließt, das vom Kontaktelement 10 einstückig ausgebildet ist. An seinem vom Verbindungselement 12 abgewandten Ende weist das Kontaktelement 10 zentrisch eine Sacklochbohrung 14 mit einem Innengewinde 15 auf, mit Hilfe dessen ein weiterführender Leiter an dem Kontaktelement 10 festlegbar ist. Das Verbindungselement 12 ist mittels einer Fremdfeder 16 auf das Kontaktstück 13 geklemmt.

Innerhalb des Buchsenelements 5 ist ein Feldsteuerelement 17 angeordnet, das sich axial über die gesamte Länge des Verbindungselements 12 und darüber hinaus erstreckt, und das mit dem Kontaktelement 10 elektrisch verbunden ist. Dadurch ist keine Absteuerung im Innern des Buchsenelements 5 erforderlich. Die elektrische Verbindung ist im ersten Ausführungsbeispiel mittels eines leitfähigen Rings 18 bereit gestellt. Der Ring 18 weist vorzugsweise auf seiner dem Feldsteuerelement 17 zugewandten Fläche eine Einführschräge auf zum vereinfachten Einführen des Feldsteuerelemente 17 bzw. des Isolierelements 19 bei der Montage der Vorrichtung. Der Ring 18 ist in elektrischem Kontakt mit dem Kontaktelement 10, insbesondere ist der Ring 18 auf den kreiszylindrischen ersten Abschnitt 11 aufgeschoben und damit elektrisch leitend und mechanisch fest mit dem Abschnitt 11 verbunden. Gleichzeitig ist der Ring 18 in elektrischem Kontakt mit dem im wesentlichen hülsenförmigen Feldsteuerelement 17. Dadurch liegt das Feldsteuerelement 17 auf demselben Potential wie das Kontaktelement 10. An seinen Enden ist das Feldsteuerelement 17 etwas trichterförmig aufgeweitet, wodurch die Feldsteuerwirkung weiter verbessert ist. Insbesondere wird das elektrische Feld durch die Verrundung des Feldsteuerelements 17 an der trichterförmigen Aufweitung besser abgesteuert und Feldstärkespitzen vermieden. Das Feldsteuerelement 17 besteht aus einem elektrisch leitfähigen Silikonkautschuk und ist als Spritzgußteil hergestellt.

Auf der vom Verbindungselement 12 abgewandten Seite ist hinter dem Feldsteuerelement 17, aber innerhalb des Buchsenelements 5 ein Isolierelement 19 angeordnet. Das Isolierelement 19 ist aus einem elektrisch isolierenden Silikonkautschuk vorzugsweise als Spritzgußteil hergestellt. Vorzugsweise sind das Feldsteuerelement 17 und das Isolierelement 19 einstückig ausgebildet, wobei das elektrisch leitfähige Feldsteuerelement 17 auf das elektrisch isolierende Isolierelement 19 aufgespritzt ist. Auf seiner vom Verbindungselement 12 bzw. Feldsteuerelement 17 abgewandten Seite weist das Isolierelement 19 mindestens abschnittsweise eine elektrisch leitfähige Oberfläche 20 auf. Diese Oberfläche 20 dient im wesentlichen der Absteuerung gegenüber den metallischen Teilen des Ringflansches 7. Dadurch, dass die Oberfläche 20 in axialer Richtung ausreichend weit vorgezogen ist, ist im Bereich des Ringflansches 7 keine geerdete Steuerelektrode erforderlich. Die Oberfläche 20 ist im Zwischenraum zwischen den beiden Schaltfeldern 2, 3 zugänglich und kann beispielsweise mit einem Schraubenfederring 21 elektrisch kontaktiert und auf Erdpotenzial gelegt werden. Zwischen dem Buchsenelement 5 und dem Ringflansch 7 ist eine gekammerte ringförmige Dichtung 22 eingelegt.

Da bei der Montage in dem Buchsenelement 5 eingeschlossene Luft entweichen können muß, sind auf dem Feldsteuerelement 17 und/oder dem Buchsenelement 5 beispielsweise Längsrippen oder Riefen vorgesehen, über welche die Luft in den Bereich des Verbindungselements 12 entweichen kann. Alternativ oder ergänzend ist das Buchsenelement 5 auf seiner dem Feldsteuerelement 17 zugeordneten Fläche wenigstens abschnittsweise konisch ausgebildet.

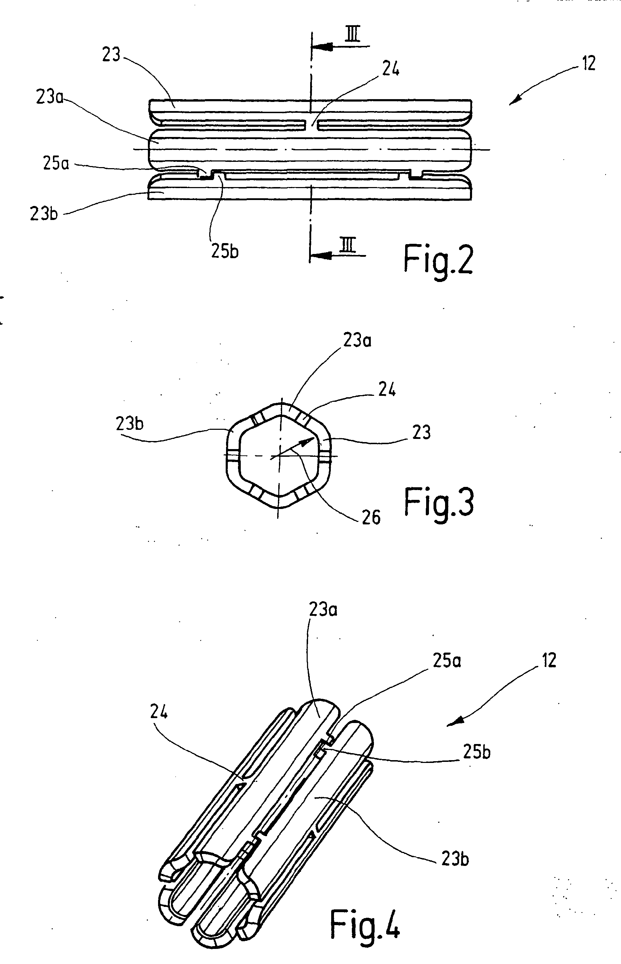

Die Figur 2 zeigt eine Seitenansicht des Verbindungselements 12. Das Verbindungselement 12 besteht aus insgesamt 6 in Umfangsrichtung hintereinander angeordneten Verbindungssegmenten 23. Die einzelnen Verbindungssegmente 23 sind dabei über axial in der Mitte angeordnete Verbindungsstege 24 miteinander verbunden. Lediglich zwischen dem ersten Verbindungssegment 23a und dem letzten Verbindungssegment 23b ist kein derartiger Verbindungssteg 24 angeordnet, sondern diese beiden Verbindungssegmente 23a, 23b bilden einstückig einander zugeordnete Anschlagmittel 25a, 25b aus. Das Anschlagmittel 25a des ersten Verbindungssegments 23a kommt beim Zusammendrücken des Verbindungselements 12 durch die Fremdfeder 16 in Anlage an das letzte Verbindungssegment 23b und verhindert dadurch ein weiteres Zusammendrücken des Verbindungselements. Entsprechendes gilt für das Anschlagmittel 25b des letzten Verbindungssegments 23b. Vorzugsweise sind jeweils zwei Anschlagmittel 25a, 25b auf gegenüberliegenden Seiten in Bezug auf die axiale Mitte angeordnet.

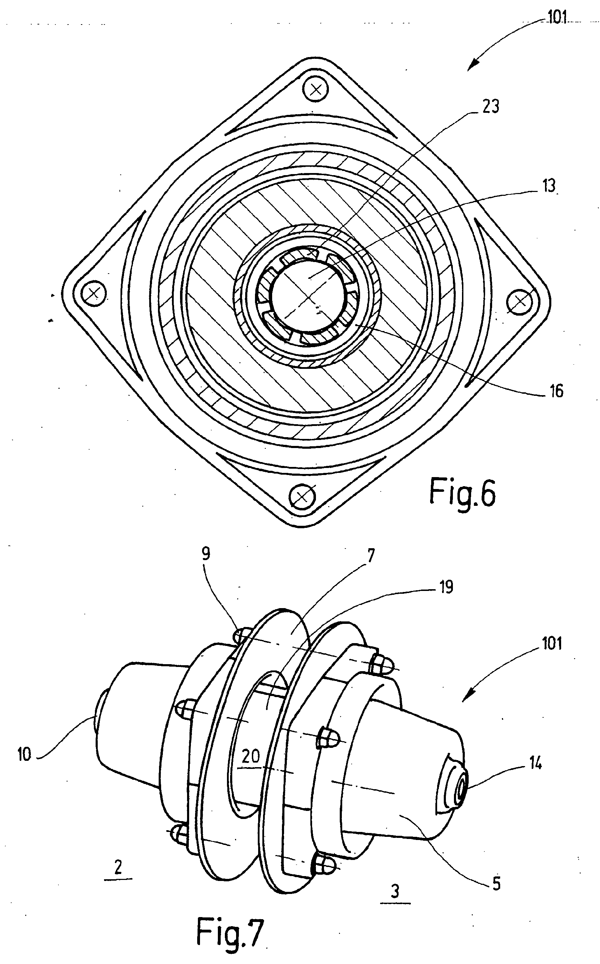

Die Figur 3 zeigt einen Querschnitt durch das Verbindungselement 12 entlang III-III der Figur 2. Der Biegeradius 26 der Verbindungssegmente 23 ist dabei kleiner als der Radius des Kontaktstücks 13. Dadurch bilden sich, wie in der Figur 6 dargestellt, zwei Kontaktstellen zwischen dem Verbindungselement 12 und dem Kontaktelement 10 aus.

Die Figur 4 zeigt noch einmal eine perspektivische Darstellung des Verbindungselements 12 mit den Anschlagmitteln 25a, 25b zwischen dem ersten und letzten Verbindungssegment 23a und 23b.

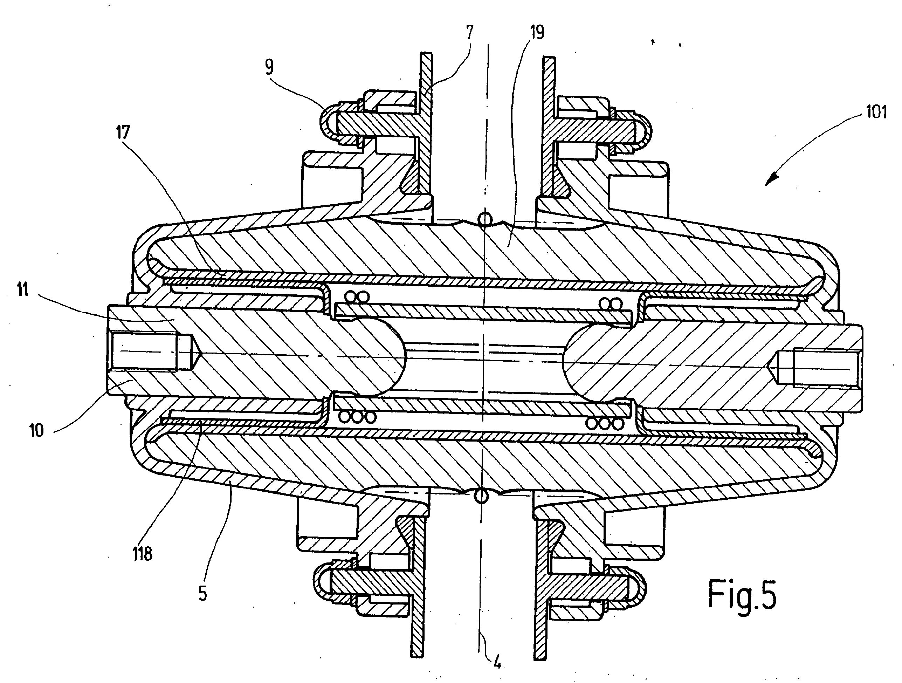

Die Figur 5 zeigt ein zweites Ausführungsbeispiel 101 der Sammelschienenkupplung. Im Unterschied zum ersten Ausführungsbeispiel 1 ist die elektrische Verbindung zwischen dem Kontaktelement 10 und dem Feldsteuerelement 17 nicht lediglich durch einen Ring 18 (Fig. 1) hergestellt, sondern über einen napf- oder topfförmigen Verbindungskörpers 118 beispielsweise aus Aluminium. Dieser weist auf seiner Bodenfläche eine Bohrung für den Durchtritt des Kontaktelements 10 auf. Die Bohrung kann dabei etwas geringer im Durchmesser sein als der Außendurchmesser des zylindrischen Abschnitts 11 des Kontaktelements 10, das an seinem entsprechenden Ende entsprechend stufenförmig oder konisch abgesetzt ist. Alternativ oder ergänzend kann der Verbindungskörper 118 mit dem Kontaktelement 10 verstemmt oder verbördelt sein. Dadurch ergibt sich eine sichere Kontaktierung des Verbindungskörpers 118 mit dem Kontaktelement 10. Außerdem ist der Verbindungskörper 118 in planer Anlage an der Stirnfläche des Buchsenelements 5. Dadurch ergibt sich eine Selbstzentrierung, durch welche die Montage der Vorrichtung vereinfacht ist. Der hohlzylindrische Teil des Verbindungskörpers 118 ist einerseits in Anlage an dem Feldsteuerelement 17, andererseits beabstandet vom Buchsenelement 5. Durch den eingehaltenen Abstand kann bei der Montage Luft entweichen. Das Buchsenelement 5 bildet eine ringförmige Schulter aus, an der das randseitige Ende des Verbindungskörpers 118 in Anlage ist.

Die Figur 6 zeigt eine Draufsicht auf einen Querschnitt auf das zweite Ausführungsbeispiel 101 der Figur 5 etwa im Bereich der Dichtung 22. Im Zentrum ist das in der Draufsicht kugelförmige Kontaktstück 13 des Kontaktelements 10 angeordnet, das in Umfangsrichtung an insgesamt 12 Kontaktstellen von den insgesamt 6 Verbindungssegmenten 23 des Verbindungselements 12 kontaktiert ist. Die Fremdfeder 16 sorgt für eine dauerhaft sichere Kontaktierung und hohe Stromtragfähigkeit, beispielsweise bis 630 Ampere oder darüber hinaus.

Die Figur 7 zeigt in perspektivischer Ansicht das zweite Ausführungsbeispiel 101 der Sammelschienenkupplung in vereinfachter Darstellung. Zwischen den beiden Ringflanschen 7 ist im Zwischenraum zwischen den beiden Schaltfeldern 2, 3 das Isolierelement 19 kontaktierbar, das an seiner Außenfläche die elektrisch leitfähige Oberfläche 20 aufweist. Dadurch, daß das Buchsenelement 5 vorzugsweise als Spritzgußteil hergestellt ist, ist zwar eine im wesentlichen kontinuierliche Wandstärke einzuhalten, anderseits sind die geometrischen Gestaltungsmöglichkeiten gegenüber einem konventionellen Gießformteil deutlich erhöht.

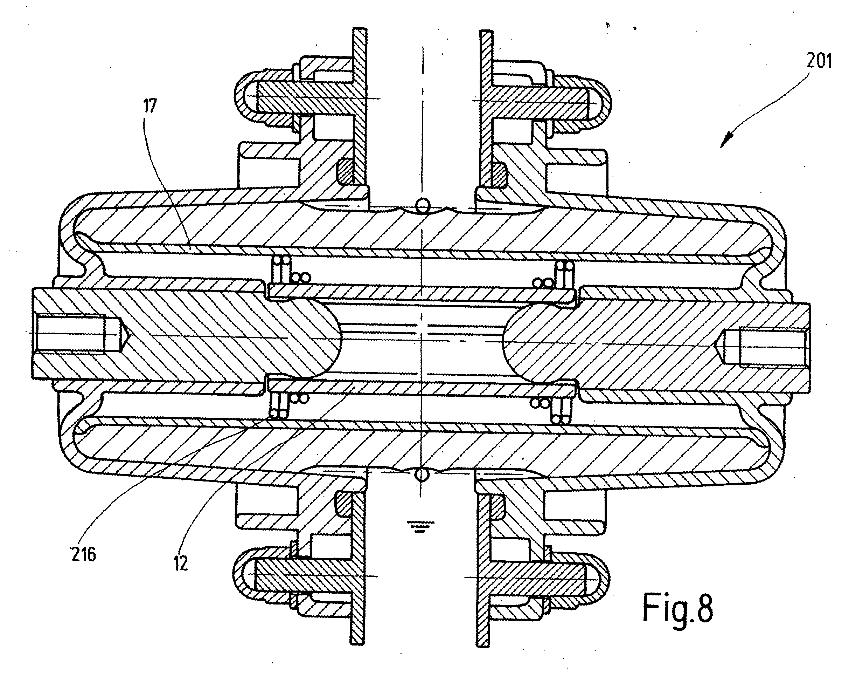

Die Figur 8 zeigt ein drittes Ausführungsbeispiel 201 der erfindungsgemäßen Sammelschienenkupplung. Im Unterschied zum ersten und zweiten Ausführungsbeispiel 1; 101 ist beim dritten Ausführungsbeispiel 201 die elektrische Verbindung zwischen dem Verbindungselement 12 und dem Feldsteuerelement 17 durch die Fremdfeder 216 bereitgestellt. Diese ist an mindestens einem axialen Ende radial aufgeweitet und kontaktiert mit diesem aufgeweiteten Teil die Feldsteuerelektrode 17. Eine axiale Fixierung der Fremdfeder 16, 216 ist in vielen Anwendungsfällen vernachlässigbar, kann jedoch bei Bedarf vorgesehen werden. Besonders einfach ist dies durch Austreiben oder Ausstanzen eines Vorsprunges aus dem Verbindungselement 12 möglich.

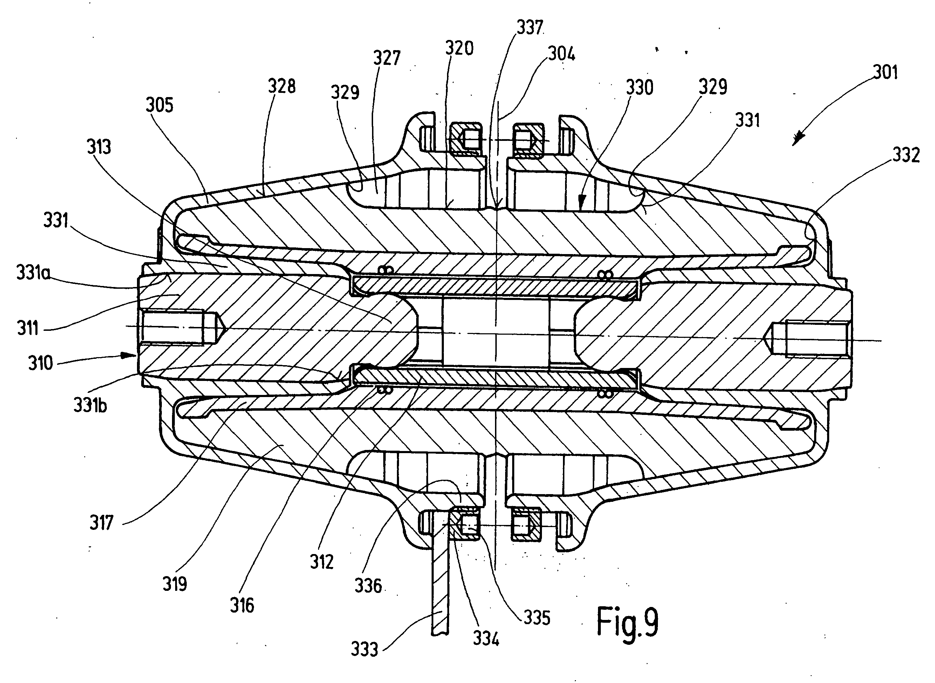

Die Fig. 9 zeigt ein viertes Ausführungsbeispiel 301 der erfindungsgemäßen Sammelschienenkupplung. Das Feldsteuerelement 317 und das Isolierelement 319 sind dabei vorzugsweise einstückig ausgebildet unter Verwendung der sogenannten LSR (Liquid Silicon Rubber) Technologie. Dadurch kann insbesondere auch eine ausreichend hohe Volumenleitfähigkeit des Feldsteuerelements 317 bereitgestellt werden. Auf seiner vom Verbindungselement 312 bzw. Feldsteuerelement 317 abgewandten Seite weist das Isolierelement 319 im Bereich eines ringförmigen Absatzes 327 eine elektrisch leitfähige Oberfläche 320 auf. Der ringförmige Absatz 327 ist dabei im Querschnitt wannenförmig mit einer Erstreckung in Axialrichtung, die in etwa der Länge des Verbindungselements 312 entspricht oder größer ist. An seinen axialen Enden geht der ringförmige Schnitt 327 jeweils unter Bildung einer im wesentlichen rechtwinkligen Kante 329 in den konischen Außenmantelbereich 328 des Isolierelements 319 über.

Die elektrisch leitfähige Oberfläche 320 erstreckt sich vorzugsweise im Bereich zwischen diesen Kanten 329. Im Bereich zwischen den Kanten 329 weist der ringförmige Absatz 327 eine im wesentlichen kreiszylindrische Außenumfangsfläche 330 auf, deren Erstreckung in Axialrichtung im wesentlichen der Länge des Verbindungselements 312 entspricht. Die kreiszylindrische Außenumfangsfläche 330 geht axial endseitig über eine entsprechende Verrundung 331 in die jeweilige Kante 329 über. Axial mittig weist die kreiszylindrische Außenumfangsfläche 330 eine Sicke 337 auf, zur Aufnahme des (in der Fig. 9 nicht dargestellten) Kontaktelements, mit dem die leitfähige Oberfläche 320 auf ein vorgebbares Potential bringbar ist, insbesondere auf Erdpotential.

Die elektrische Verbindung des Feldsteuerelements 317 mit dem Verbindungselement 312 erfolgt über die Fremdfeder 316. Hierzu ist der Außendurchmesser der Fremdfeder 316 größer gewählt als der Innendurchmesser des mittigen kreiszylindrischen Abschnitts des Feldsteuerelements 317, insbesondere ist die lichte Weite des Feldsteuerelements 317 in diesem Bereich nur geringfügig größer als der Außendurchmesser der zylindrischen Mantelfläche des Verbindungselements 312. In einer bevorzugten Ausführungsart weist der mittige kreiszylindrische Abschnitt des Feldsteuerelements 317 axial verlaufende Stege auf, beispielsweise vier gleichverteilt in Umfangsrichtung, durch welche die elektrische Verbindung zu der Fremdfeder 316 bzw. dem Verbindungselement 312 erfolgt. Außerhalb der Stege ist die lichte Weite des Feldsteuerelements 317 größer als der Außendurchmesser der Fremdfeder 316.

Das Buchsenelement 305 weist an den axialen Enden des von ihm einstückig ausgebildeten Rohrstutzenbereichs 331, der den ersten Abschnitt 311 des Kontaktelements 310 aufnimmt, Verjüngungen 331a, 331b auf, durch die das Kontaktelement 310 in Bezug auf das Buchsenelement 305 axial fixiert ist.

Im Unterschied zu den vorstehend gezeigten Ausführungsbeispielen 1, 101, 201 weist das Buchsenelement 305 des vierten Ausführungsbeispiels 301 in dem Ringraum zur Aufnahme des Isolierelements 319 bzw. des Feldsteuerelements 317 einen jedenfalls abschnittsweise zylindrischen und sich in radialer Richtung erstreckenden oder konischen Bereich 332 auf. Das Feldsteuerelement 317 erstreckt sich nur weniger als die Hälfte in Radialrichtung in diesen Bereich 332 hinein.

Die Festlegung des Buchsenelements 305 an der in der unteren Bildhälfte der Fig. 9 angedeuteten Gehäusewand 333 erfolgt mittels eines Befestigungsringes 334, der mit einem Innengewinde auf ein von dem Buchsenelement 305 ausgebildetes Außengewinde aufschraubbar ist und dadurch das Buchsenelement 305 an der Gehäusewand 333 klemmbar ist. Hierzu weist der vorzugsweise aus Aluminium bestehende Befestigungsring 334 kreisumfänglich gleichverteilt mindestens zwei Werkzeugangriffsflächen 335 auf, die im dargestellten Ausführungsbeispiel im wesentlichen durch Bohrungen gebildet sind. Der das Außengewinde aufweisende axial endseitige und stutzenförmige Abschnitt 336 des Buchsenelements 305 weist einen Durchmesser auf, der geringer ist als die entsprechende Bohrung in der Gehäusewand 333, so daß dieser Abschnitt 336 durch die Öffnung in der Gehäusewand 333 hindurchsteckbar ist.

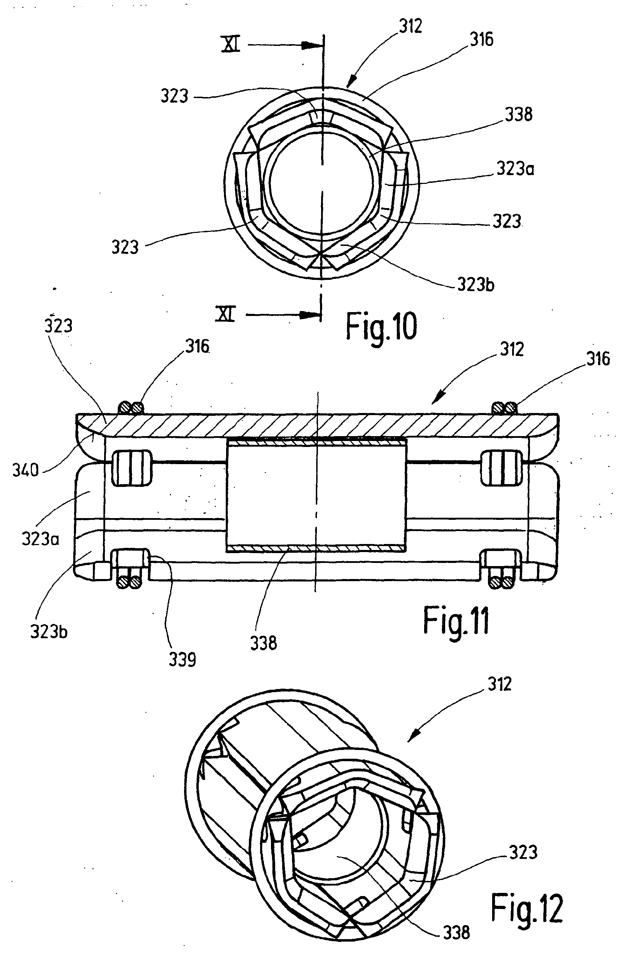

Die Fig. 10 zeigt das für die Vorrichtung der Fig. 9 verwendete zweite Ausführungsbeispiel des Verbindungselements 312 in einer stirnseitigen Draufsicht. Das Verbindungselement 312 weist insgesamt drei in Umfangsrichtung hintereinander angeordnete Verbindungssegmente 323 auf, die jeweils zwei Kontaktschenkel 323a, 323b aufweisen, die einen stumpfen Winkel von etwa 135° miteinander einschließen. Jeder dieser Kontaktschenkel 323a, 323b bildet einen punkt- oder linienförmigen Kontakt mit dem Kontaktstück 313 des zugehörigen Kontaktelements 310 aus. Die Fremdfeder 316, welche die drei Verbindungssegmente 323 umgreift ist axial, d.h. senkrecht zur Zeichenebene der Fig. 10, in Bezug auf die Verbindungssegmente 323 fixiert. Innerhalb der von den Verbindungssegmenten 323 gebildeten Hohlform ist ein Stützelement angeordnet, das im Ausführungsbeispiel von einem Stützrohr 338 gebildet ist. Das Stützelement hält die Verbindungssegmente 323 in einem Abstand, der etwas geringer ist als die entsprechenden Abmessungen des Kontaktstücks 313 (siehe Fig. 9) des Kontaktelements 310.

Die Fig. 11 zeigt einen Schnitt durch das Verbindungselement 312 der Fig. 10 gemäß XI - XI. Das Stützrohr 338 ist vorzugsweise axial mittig angeordnet und weist eine axiale Erstreckung auf, die ausreichend gering ist, um ein Aufstecken des Verbindungselements 312 auf die Kontaktstücke 313 der Kompaktelemente 310 zu gewährleisten. Vorzugsweise beträgt die axiale Erstreckung des Stützrohres 338 zwischen 20 und 60 % der axialen Erstreckung der Verbindungssegmente 323. Nahe oder an den axialen Enden weisen die Verbindungselemente 323 vorzugsweise beidseitig Aussparungen 339 auf, durch welche die dort jeweils angeordnete Fremdfeder 316 in Axialrichtung im wesentlichen fixiert ist. Die Aussparungen 339 sind im Ausführungsbeispiel im Umfangsrichtung randseitig an den Schenkeln 323a, 323b angeordnet. Alternativ oder ergänzend können entsprechende Aussparungen auch im Bereich der Verbindung der beiden Schenkel 323a, 323b angeordnet sein.

Axial randseitig weisen die Verbindungssegmente 322 außerdem eine trichterförmige Ausweisung 340 auf, um das Aufstecken des Verbindungselemts 312 auf die Kontaktstücke 313 zu vereinfachen.

Die Fig. 12 zeigt eine perspektivische Ansicht des in den Fig. 10 und 11 dargestellten Verbindungselements 312. Bei entsprechender Ausgestaltung der Verbindungssegmente 323 dahingehend, daß ein Hineinfallen der Verbindungssegmente 323 in die von den Verbindungssegmenten 323 zu bildende Hohlform verhindert ist, kann auf das Stützelement, im Ausführungsbeispiel das Stützrohr 338, verzichtet werden.

## Patentansprüche

1. Vorrichtung zum elektrischen Verbinden von zwei vorzugsweise Isoliergas-gefüllten Schaltfeldern, insbesondere Sammelschienenkupplung (1; 101; 201), die auf der Seite jedes Schaltfeldes (2, 3) jeweils ein Buchsenelement (5, 6) mit einem darin angeordneten Kontaktelement (10) und ein Feldsteuerelement (17) aufweist, wobei die Kontaktelemente (10) durch ein Verbindungselement (12) elektrisch verbindbar sind, **dadurch gekennzeichnet, dass** das Feldsteuerelement (17) aus einem kautschukartig elastisch verformbaren Werkstoff besteht, und dass das .. kautschukartig elastisch verformbare Feldsteuerelement (17) sich axial über die gesamte Länge des Verbindungselements (12) erstreckt.

2. Vorrichtung nach Anspruch 1, **dadurch gekennzeichnet, dass** das Feldsteuerelement (17) im wesentlichen hohlzylindrisch ist, mit vorzugsweise radial aufgeweiteten Enden, und beide Kontaktelemente (10) und das Verbindungselement (12) in sich aufnimmt.

3. Vorrichtung nach Anspruch 1 oder 2, **dadurch gekennzeichnet, dass** das Feldsteuerelement (17) aus einem elektrisch leitfähigen Silikonkautschuk besteht und vorzugsweise ein Spritzgußteil ist.

4. Vorrichtung nach einem der Ansprüche 1 bis 3, **dadurch gekennzeichnet, dass** das Buchsenelement (5) ein Spritzgußteil ist.

5. Vorrichtung nach einem der Ansprüche 1 bis 4, **dadurch gekennzeichnet, dass** auf der vom Verbindungselement (12) abgewandten Seite hinter dem Feldsteuerelement (17) und innerhalb des Buchsenelements (5) ein Isolierelement (19) angeordnet ist.

6. Vorrichtung nach Anspruch 5, **dadurch gekennzeichnet, dass** das Isolierelement (19) aus einem elektrisch isolierenden Silikonkautschuk besteht und vorzugsweise ein Spritzgußteil ist.

7. Vorrichtung nach Anspruch 5 oder 6, **dadurch gekennzeichnet, dass** das Feldsteuerelement (17) und das Isolierelement (19) einstückig ausgebildet sind, insbesondere das Feldsteuerelement (17) auf das Isolierelement (19) aufgespritzt ist.

8. Vorrichtung nach einem der Ansprüche 5 bis 7, **dadurch gekennzeichnet, dass** das Isolierelement (19) auf seiner vom Verbindungselement (12) abgewandten Seite mindestens abschnittsweise eine elektrisch leitfähige Oberfläche (20) aufweist.

9. Vorrichtung nach Anspruch 8, **dadurch gekennzeichnet, dass** die elektrisch leitfähige Oberfläche (20) durch Aufsprühen oder Aufstreichen eines elektrisch leitfähigen Beschichtungsmittels herstellbar ist.

10. Vorrichtung nach einem der Ansprüche 1 bis 9, **dadurch gekennzeichnet, dass** das Verbindungselement (12) mehrere in Umfangsrichtung hintereinander angeordnete Verbindungssegmente (23) aufweist, die jeweils mindestens eine Kontaktstelle zu den Kontaktelementen (10) bilden.

11. Vorrichtung nach Anspruch 10, **dadurch gekennzeichnet, dass** das Verbindungselement (12) im wesentlichen hohlzylindrisch ist und einen axial durchgehenden Spalt aufweist.

12. Vorrichtung nach Anspruch 10 oder 11, **dadurch gekennzeichnet, dass** das Verbindungselement (12) gegen die Wirkung einer Fremdfeder (16) spreizbar ist.

13. Vorrichtung nach einem der Ansprüche 10 bis 12, **dadurch gekennzeichnet, dass** die beiden den axialen Spalt bildenden Verbindungssegmente (23a, 23b) miteinander korrespondierende Anschlagmittel (25a, 25b) aufweisen, die einen minimalen Durchmesser des Verbindungselements (12) bestimmen

14. Vorrichtung nach einem der Ansprüche 1 bis 13, **dadurch gekennzeichnet, dass** das Kontaktelement (10) an seinem dem Verbindungselement (12) zugewandten Ende ein mindestens teilkugelförmiges Kontaktstück (13) zum Aufsetzen des Verbindungselements (12) aufweist.

15. Vorrichtung nach Anspruch 14, **dadurch gekennzeichnet, dass** das Verbindungselement (12), insbesondere die Verbindungssegmente (23), einen Biegeradius (26) aufweist, der kleiner ist als der Radius des Kontaktelements (10), insbesondere kleiner als der Radius des teilkugelförmigen Kontaktstücks (13).

## Claims

1. Device for the electrical connection of two switchgear panels which are preferably filled with insulating gas, in particular a busbar coupling (1; 101; 201), which has on the side of each switchgear panel (2, 3) a bush element (5, 6) with a contact element (10) arranged therein and a field control element (17), wherein the contact elements (10) can be connected electrically by a connecting element (12), **characterised in that** the field control element (17) consists of a material which is resiliently deformable in the manner of rubber, and **in that** the field control element (17) resiliently deformable in the manner of rubber extends axially over the entire length of the connecting element (12).

2. Device according to claim 1, **characterised in that** the field control element (17) is substantially hollow cylindrical, with preferably radially widened ends, and receives both contact elements (10) and the connecting element (12).

3. Device according to claim 1 or 2, **characterised in that** the field control element (17) consists of an electrically conductive silicone rubber and is preferably an injection-moulded part.

4. Device according to any one of claims 1 to 3, **characterised in that** the bush element (5) is an injection-moulded part.

5. Device according to any one of claims 1 to 4, **characterised in that** an insulating element (19) is arranged on the side remote from the connecting element (12) behind the field control element (17) and within the bush element (5).

6. Device according to claim 5, **characterised in that** the insulating element (19) consists of an electrically insulating silicone rubber and is preferably an injection-moulded part.

7. Device according to claim 5 or 6, **characterised in that** the field control element (17) and the insulating element (19) are formed in one piece, in particular the field control element (17) is injection-moulded onto the insulating element (19).

8. Device according to any one of claims 5 to 7, **characterised in that** the insulating element (19) has an electrically conductive surface (20) at least in sections on its side remote from the connecting element (12).

9. Device according to claim 8, **characterised in that** the electrically conductive surface (20) can be produced by applying an electrically conductive coating composition by spraying or spreading.

10. Device according to any one of claims 1 to 9, **characterised in that** the connecting element (12) has a plurality of connecting segments (23) arranged one behind the other in the peripheral direction, each of which connecting segments (23) forms at least one contact point with the contact elements (10).

11. Device according to claim 10, **characterised in that** the connecting element (12) is substantially hollow cylindrical and has an axial through-gap.

12. Device according to claim 10 or 11, **characterised in that** the connecting element (12) is expandable against the force of an external spring (16).

13. Device according to any one of claims 10 to 12, **characterised in that** the two connecting segments (23a, 23b) forming the axial gap have mutually corresponding stop means (25a, 25b) which determine a minimum diameter of the connecting element (12).

14. Device according to any one of claims 1 to 13, **characterised in that** the contact element (10) has at its end facing the connecting element (12) an at least partially spherical contact member (13) for the seating of the connecting element (12).

15. Device according to claim 14, **characterised in that** the connecting element (12), in particular the connecting segments (23), has a radius of curvature (26) which is smaller than the radius of the contact element (10), in particular smaller than the radius of the partially spherical contact member (13).

## Revendications

1. Dispositif de liaison électrique de deux panneaux de couplage, de préférence emplis de gaz isolant, notamment couplage (1, 101, 201) de bar omnibus qui ont, du côté de chaque panneau (2, 3) de couplage,respectivement un élément (5, 6) formant borne avec un élément (10) de contact qui y est disposé et un élément (17) de commande de champ, les éléments (10) de contact pouvant être reliés électriquement par un élément (12) de liaison, **caractérisé en ce que** l'élément (17) de commande de champ est en un matériau déformable élastiquement à la manière du caoutchouc et **en ce que** l'élément (17) de commande de champ déformable élastiquement à la manière du caoutchouc s'étend axialement sur toute la longueur de l'élément (12) de liaison.

2. Dispositif suivant la revendication 1, **caractérisé en ce que** l'élément (17) de commande de champ est sensiblement cylindrique creux en ayant, de préférence, des extrémités élargies radialement et reçoit en lui deux éléments (10) de contact et l'élément (12) de liaison.

3. Dispositif suivant la revendication 1 ou 2, **caractérisé en ce que** l'élément (17) de commande de champ est en caoutchouc de silicone conducteur de l'électricité et est, de préférence, une pièce moulée par injection.

4. Dispositif suivant l'une des revendications 1 à 3, **caractérisé en ce que** l'élément (5) formant borne est une pièce moulée par injection.

5. Dispositif suivant l'une des revendications 1 à 4, **caractérisé en ce que**, du côté éloigné de l'élément (12) de liaison, un élément (19) isolant est placé derrière l'élément (17) de commande de champ et à l'intérieur de l'élément (5) formant borne.

6. Dispositif suivant la revendication 5, **caractérisé en ce que** l'élément (19) isolant est en caoutchouc de silicone isolant électriquement et est, de préférence, une pièce moulée par injection.

7. Dispositif suivant la revendication 5 ou 6, **caractérisé en ce que** l'élément (17) de commande de champ et l'élément (19) isolant sont constitués d'une seule pièce, l'élément (17) de commande de champ étant, notamment, surmoulé sur l'élément (19) isolant.

8. Dispositif suivant l'une des revendications 5 à 7, **caractérisé en ce que** l'élément (19) isolant a, du côté éloigné de l'élément (12) de liaison, au moins par endroit, une surface (20) conductrice de l'électricité.

9. Dispositif suivant la revendication 8, **caractérisé en ce que** la surface (20) conductrice de l'électricité peut être produite par projection ou étalement d'un agent de revêtement conducteur de l'électricité.

10. Dispositif suivant l'une des revendications 1 à 9, **caractérisé en ce que** l'élément (12) de liaison a plusieurs segments (23) de liaison, qui sont disposés les uns derrière les autres dans la direction périphérique et qui forment respectivement un point de contact avec les éléments (10) de contact.

11. Dispositif suivant la revendication 10, **caractérisé en ce que** l'élément (12) de liaison est sensiblement cylindrique creux et a une fente traversante axialement.

12. Dispositif suivant la revendication 10 ou 11, **caractérisé en ce que** l'élément (12) de liaison peut être écarté à l'encontre de l'action d'un ressort (16) extérieur.

13. Dispositif suivant l'une des revendications 10 à 12, **caractérisé en ce que** les deux segments (23a, 23b) de liaison formant la fente axiale ont des.moyens (25a, 25b) de butée, qui se correspondent entre eux et qui déterminent un diamètre minimum de l'élément (12) de liaison.

14. Dispositif suivant l'une des revendications 1 à 13, **caractérisé en ce que** l'élément (10) de contact a, à l'extrémité tournée vers l'élément (12) de liaison, une pièce (13) de contact au moins en forme de bille partielle et destinée à s'appliquer à l'élément (12) de liaison.

15. Dispositif suivant la revendication 14, **caractérisé en ce que** l'élément (12) de liaison, notamment les segments (23) de liaison, a un rayon (26) de courbure, qui est plus petit que le rayon de l'élément (10) de contact, notamment plus petit que le rayon de la pièce (13) de contact en forme de bille partielle.
